# EUROPÄISCHE PATENTSCHRIFT

(11) **EP 2 193 866 B1**
(45) Veröffentlichungstag und Bekanntmachung des Hinweises auf die Patenterteilung: **13.05.2015**
(21) Anmeldenummer: 09176073.6
(22) Anmeldetag: 16.11.2009
(51) Int. Cl.: B23B 39/16, B23B 45/00, B23B 49/02, B25H 1/00

(54) **Mobile Bohrvorrichtung zum Erstellen von Mehrfachbohrungen in einem Bauteil**
Mobile drilling device for producing multiple boreholes in a component
Dispositif de perçage mobile destiné à la création de trous multiples dans un composant

(30) Priorität: 04.12.2008 DE 102008044352
(43) Veröffentlichungstag der Anmeldung: 09.06.2010
(73) Patentinhaber: HILTI Aktiengesellschaft, 9494 Schaan (LI)
(72) Erfinder: Greisl, Gerhard, 82205 Gilching (DE); Schlömer, Horst, 86919 Utting (DE)
(74) Vertreter: Hilti Aktiengesellschaft Corporate Intellectual Property

(56) Entgegenhaltungen:
- EP-A1- 0 113 837
- EP-A1- 0 666 154
- DE-A1- 10 329 458
- DE-U1- 8 525 577
- DE-U1- 20 115 251
- DE-U1-202004 006 263
- GB-A- 2 074 060
- US-A- 4 915 549
- US-A- 4 917 548

## Beschreibung

Die Erfindung betrifft eine mobile Bohrvorrichtung zum Erstellen von Mehrfachbohrungen in einem Bauteil, der im Oberbegriff des Patentanspruchs 1 genannten Art. Weiter betrifft die Erfindung ein Verfahren zum Erstellen von Mehrfachbohrungen mit einer derartigen Bohrvorrichtung.

Elemente, wie Fassadenelemente einer vorgehängten Fassade oder Rückhaltesysteme, z. B. Leitplanken, Geländer und dergleichen, weisen Befestigungspunkte zu deren Festlegung an einem Bauteil auf, die in gleichmässigen Abständen zueinander angeordnet sind. Es werden daher Mehrfachbohrungen im Bauteil erstellt, deren Bohrbild und Abstände zueinander der Ausgestaltung und Anordnung der Befestigungspunkte des festzulegenden Elementes entspricht. Um eine einfache Montage der festzulegenden Elemente am Bauteil zu gewährleisten und unnötige Spannungen sowie daraus resultierende Schäden am festzulegenden Element zu vermeiden, ist eine präzise Ausführung der Bohrungen erforderlich.

Zu diesem Zweck ist aus der US 4,915,549 eine mobile Bohrvorrichtung zum Erstellen von Mehrfachbohrungen in einem Bauteil bekannt, die vier zueinander beabstandete, ständergeführte, einzeln gesteuerte Bohrgeräte aufweist, wobei jedes Bohrgerät über eine Positioniereinrichtung relativ zu einem anderen Bohrgerät positionierbar und über eine Vorschubeinrichtung relativ zum Bauteil verfahrbar ist. Die ständergeführten Bohrgeräte sind an einem Grundgestell festgelegt, das seinerseits auf einer verfahrbaren Arbeits-Scherenbühne angeordnet ist.

Die Bohrvorrichtung gemäss der US 4,915,549 wird an die gewünschte Stelle in Bezug auf das Bauteil verfahren, in dem die Bohrungen erstellt werden sollen, und anschliessend die Bohrgeräte in die entsprechende Position zum gleichzeitigen Erstellen von vier Bohrungen im Bauteil positioniert. Nach dem Einschalten aller Bohrgeräte werden diese über die Vorschubeinrichtung mit einer Anpresskraft relativ zum Bauteil verfahren, wobei gleichzeitig vier Bohrlöcher mit dem gewünschten Bohrbild erstellt werden. Nach Erreichen der gewünschten Bohrtiefe werden die Bohrgeräte in ihre Ausgangsposition zurückgefahren. Anschliessend können mit dieser Bohrvorrichtung weitere Mehrfachbohrungen in einem Abstand zu den zuvor erstellten Bohrungen am Bauteil erstellt werden.

Nachteilig an der bekannten Lösung ist, dass mit dieser Bohrvorrichtung nur im Wesentlichen horizontal ausgerichtete Bohrlöcher in vertikal ausgerichteten Oberflächen von Bauteilen erstellt werden können. Zudem lassen sich nur bedingt auf die entsprechende Oberfläche des Baurteils bezogene lotrechte Bohrungen mit der bekannten Bohrvorrichtung erstellen. Des Weiteren weisen die Werkzeuge der Bohrgeräte bei dem Bohrverfahren gemäss der US 4,915,549 einen hohen Verschleiss auf.

Aufgabe der Erfindung ist es, eine mobile Bohrvorrichtung zum Erstellen von Mehrfachbohrungen in einem Bauteil zu schaffen, die lotrechte Mehrfachbohrungen in im Wesentlichen horizontal ausgerichteten Bauteilen erstellt, wobei die erstellten Bohrbilder präzise ausgeführt sind und die Bohrvorrichtung einfach handhabbar ist. Weiter ist es die Aufgabe der Erfindung, ein Verfahren zum Erstellen von Mehrfachbohrungen in einem Bauteil mit einer Bohrvorrichtung zu schaffen, bei dem die Werkzeuge der Bohrgeräte einem geringeren Verschleiss ausgesetzt sind.

Die Aufgabe in Bezug auf die eine mobile Bohrvorrichtung ist durch die Merkmale des unabhängigen Anspruchs 1 gelöst. Gemäss der Erfindung umfasst das Grundgestell eine Grundpatte, die von den Bohrgeräten beabstandet ist und zumindest eine Führungsöffnung zum Führen der Werkzeuge dieser Bohrgeräte aufweist, sowie eine mit dem Bauteil in Anlage kommende Stelleinrichtung, mit der das Grundgestell relativ zum Bauteil ausrichtbar ist.

Mit der dem Bauteil zugewandten Grundplatte und der zumindest einen Führungsöffnung werden die Werkzeuge der Bohrgeräte während dem gesamten Bohrvorgang nahe zum Bauteil geführt, womit die Bohrlöcher im Bauteil präzise erstellt werden. Mittels der Stelleinrichtung lässt sich das Grundgestell exakt zum Bauteil ausrichten. Mit der Kombination der zusätzlichen Führung und der Justierbarkeit des Grundgestells ist eine Erstellung von lotrecht zu der entsprechenden Oberfläche ausgerichteten Bohrlöchern gewährleistet, wobei entsprechend der Anzahl der vorhandenen Bohrgeräte gleichzeitig eine Anzahl von Bohrlöchern erstellt wird.

Das Grundgestell ist vorteilhaft eine Rahmenkonstruktion, in der beispielsweise eine Steuerung für die Bohrgeräte und ein Mediumsspeicher für den Betrieb der Vorschubeinrichtung der Bohrgeräte, z. B. eine Pneumatik, angeordnet sind. Weiter ist vorteilhaft ein Dach zum Schutz der Komponenten der Bohrvorrichtung vor Witterungseinflüssen vorgesehen. Weiter vorteilhaft sind an den Seitenwänden der Rahmenkonstruktion Planen als Spritzschutz für die Komponenten der Bohrvorrichtung angeordnet. Somit kann die Bohrvorrichtung auch bei Regen oder Schneefall eingesetzt werden.

Vorzugsweise ist zumindest eine der Anzahl der Bohrgeräte entsprechende Anzahl von Führungsöffnungen zum Führen der Werkzeuge dieser Bohrgeräte in der Grundplatte vorgesehen, womit für jedes Werkzeug eines Bohrgerätes eine dem Bauteil zugewandte Führung vorhanden ist. In einer Variante sind mehr Führungsöffnungen als die Anzahl der Bohrgeräte vorgesehen, wobei diese vorteilhaft paarweise und in zwei parallel zueinander verlaufenden Linien angeordnet sind. Damit lassen sich unterschiedliche Bohrbilder mit einer Bohrvorrichtung erstellen.

Bevorzugt sind zumindest vier in einem Rechteck angeordnete Führungsöffnungen in der Grundplatte vorgesehen, womit vorteilhaft Bohrbilder zur Festlegung von Pfosten eines Rückhaltesystems erstellbar sind. Derartige Pfosten werden üblicherweise mit vier Ankern am Bauteil, wie einen Brückenkordon festgelegt.

Vorzugsweise sind zumindest zwei der Führungsöffnungen als Langlöcher ausgebildet, deren Längserstreckung gleichgerichtet angeordnet ist, womit unterschiedliche Bohrbilder mit einer Bohrvorrichtung erstellbar sind. Um das Bohrbild zu ändern, werden z. B. zwei der Bohrgeräte, deren Werkzeuge in den als Langlöchern ausgebildeten Führungsöffnungen geführt sind, entsprechend der länglichen Ausrichtung der Langlöcher relativ zu den anderen Bohrgeräten verschoben, die stationär über den anderen Führungsöffnungen angeordnet und deren Werkzeuge in diesen Führungsöffnungen geführt sind.

Bevorzugt ist in jeder der Führungsöffnungen eine Führungsbuchse zum Zentrieren der Werkzeuge zumindest eines Bohrgerätes vorgesehen, womit eine genaue Führung des entsprechenden Werkzeugs gewährleistet ist. Vorteilhaft sind die Führungsbuchsen aus einem Material gefertigt, das eine geringe Reibung zwischen der Führungsbuchse und dem entsprechenden Werkzeug erzeugt. Damit wird der Verschleiss der Führungsbuchse massgeblich reduziert.

Vorzugsweise sind die Führungsbuchsen auswechselbar in den Führungsöffnungen festgelegt und somit nach Erreichen eines gewissen Verschleisses austauschbar. Sind eine oder mehrere Führungsbuchsen abgenutzt und stellen somit keine einwandfreie Führung der Werkzeuge mehr sicher, können die verschlissenen Führungsbuchsen durch neue ersetzt werden, so dass wieder eine einwandfreie Führung der Werkzeuge gegeben ist.

Sind in den als Langlöcher ausgebildeten Führungsöffnungen Führungsbuchsen vorgesehen, so sind diese vorteilhaft verschieblich in diesen angeordnet. Somit lassen sich die Führungsbuchsen an die zuvor eingestellte Anordnung der Bohrgeräte im Langloch einfach anpassen.

Bevorzugt weisen die Führungsbuchsen den Bohrgeräten zugewandt eine Einführschräge auf, welche beim Absenken beziehungsweise beim Vorschub der Bohrgeräte in Richtung des Bauteils die freien Enden der teilweise taumelnden Werkzeuge aufnehmen und in deren vorteilhaft zylindrischen Führungsbereich lenken.

Vorzugsweise schliesst die Einführschräge der Führungsbuchse mit der Bohrachse des Werkzeugs einen Winkel von 40° bis 80°, vorteilhaft 50° bis 70°, ein, womit eine vorteilhafte Zuführung des freien Endes des Werkzeugs in den Führungsbereich der Führungshülse gewährleistet ist.

Bevorzugt umfasst die Stelleinrichtung mehrere Stellelemente, die zur Höhenjustierung des Grundgestells relativ zum Bauteil in Gegenelemente versetzbar eingreifen. Die Stellelemente stehen während dem Bohrvorgang auf dem Bauteil, wobei mindestens drei Stellelemente relativ zum Bauteil beziehungsweise zur Grundplatte in Gegenelemente versetzbar eingreifen. Vorteilhaft sind die Stellelemente in den Ecken des Grundgestells vorgesehen. Die Stellelemente weisen vorteilhaft einen Auflageteller zur Auflage am Bauteil und eine vom Auflageteller abragende Spindel auf, die in ein entsprechend ausgebildetes Gegenelement eingreifen. Das Gegenelement kann z. B. ein separates Teil oder ein direkt am Grundgestell integriertes Element sein. Beispielsweise ist die Spindel des Stellelementes mit einem Gewinde, z. B. Aussengewinde, versehen, das in ein Gegengewinde, z. B. Innengewinde, des Gegenelementes eingreift. Ein derartiges Gegenelement ist z. B. als Mutter ausgebildet, welche am Grundgestell beispielsweise angeschweisst ist. Weiter kann auch eine Hebevorrichtung, wie eine Kurbelanordnung, vorgesehen sein, über welche die Stelleinrichtung zur Justierung des Grundgestells beispielsweise manuell oder motorisch einstellbar ist.

Vorzugsweise ist eine Bohrbildabstandseinrichtung zur Erstellung von mehreren zueinander im gleichen Abstand zu erstellenden Bohrbildern vorgesehen, welche ein einfaches und genaues Erstellen mehrerer in einem Abstand zueinander angeordneten Bohrbilder ermöglicht, wie sie beispielsweise für die Festlegung von Rückhaltesystemen im Strassenbau gewünscht beziehungsweise erforderlich sind.

Bevorzugt umfasst die Bohrbildabstandseinrichtung ein in ein Bohrloch einführbares Ankerelement und ein mit dem Ankerelement und dem Grundgestell verbundenes flexibles, vorteilhaft in seiner Länge anpassbares Distanzmittel. Nach dem Erstellen eines Bohrbildes wird das Ankerelement, beispielsweise ein Bolzen oder Dorn, in eines der zuvor erstellten Bohrlöcher eingeführt und die Bohrvorrichtung entlang dem Bauteil verschoben, bis das flexible Distanzmittel, z. B. eine Kette, gespannt ist. Das flexible Distanzmittel wird vorgängig in seiner Länge derart angepasst, dass im gespannten Zustand des Distanzmittels der gewünschte Abstand zwischen den Bohrbildern gegeben ist. Mit dieser Bohrbildabstandseinrichtung ist auch bei gekrümmten Oberflächen des Bauteils ein genauer Abstand der Bohrbilder zueinander ohne die Zuhilfenahme eines weiteren Messmittels sichergestellt.

Vorzugsweise ist eine Umpositioniervorrichtung an dem Grundgestell zum Umpositionieren der Bohrvorrichtung vorgesehen, die während dem Bohrvorgang ausser Funktion ist. Vor oder nach dem Erstellen der Bohrungen an der gewünschten Position am Bauteil werden entsprechende Teile der Umpositioniervorrichtung mit der Oberfläche des Bauteils in Anlage gebracht, so dass die Bohrvorrichtung mit geringem Kraftaufwand umpositionierbar ist.

Bevorzugt umfasst die Umpositioniervorrichtung zumindest zwei Rollen, die relativ zum Bauteil versetzbar sind, womit die Bohrvorrichtung einfach verschiebbar ist. Beispielsweise sind an einer Seite des Grundgestells zwei Rollen und beabstandet dazu ist am Grundgestell ein Handgriff vorgesehen, über den die Bohrvorrichtung um die Rollenachse kippbar und führbar ist.

In einer vorteilhaften Variante sind beispielsweise an zwei einander gegenüberliegenden Seiten des Grundgestells, z. B. an der Grundplatte, je zwei Rollen vorgesehen, die über eine vorteilhaft gesteuerte Hebeeinrichtung zum Umpositionieren der Bohrvorrichtung in Richtung des Bauteils verfahrbar sind und das Grundgestell anheben, so dass die Stelleinrichtung nicht mehr mit dem Bauteil in Anlage ist. Nachdem die Bohrvorrichtung an der neuen Stelle positioniert ist, werden die Rollen wieder in Richtung des Grundgestells verfahren, wobei das Grundgestell sich aufgrund des Eigengewichts senkt, bis die Stelleinrichtung wieder mit dem Bauteil in Anlage ist. Beispielsweise werden die Rollen über eine pneumatische oder hydraulische Einrichtung relativ zum Untergrund versetzt.

Vorzugsweise ist eine verstellbare Seitenführungseinrichtung an dem Grundgestell zur Führung der Bohrvorrichtung in einem bestimmten Abstand zu einer Kante des Bauteils vorgesehen, womit dieser Abstand beim erneuten Positionieren der Bohrvorrichtung in einfacher Art und Weise konstant gehalten wird.

Das erfindungsgemässe Verfahren gemäß Anspruch 15 zum Erstellen von Mehrfachbohrungen in einem Bauteil mit einer Bohrvorrichtung, die mehrere zueinander entsprechend des zu erstellenden Bohrbildes beabstandete, ständergeführte, über eine Vorschubeinrichtung relativ zum Bauteil verfahrbare sowie einzeln gesteuerte Bohrgeräte aufweist, die in einem Grundgestell der Bohrvorrichtung angeordnet sind, ist nachfolgend dargelegt.

Zuerst wird die Bohrvorrichtung an der gewünschten Position am Bauteil positioniert und mit der mit dem Bauteil in Anlage gebrachten, am Grundgestell angeordneten Stelleinrichtung relativ zum Bauteil lotrecht ausgerichtet. Dann werden alle Bohrgeräte gleichzeitig eingeschaltet. Entlang der Ständer werden die Bohrgeräte mit der gleichen Anpresskraft in Richtung des Bauteils vorgeschoben, wobei - sofern die Werkzeuge nicht bereits in den Führungsöffnungen geführt sind - die freien Enden des Werkzeugs in den Führungsöffnungen in der Grundplatte aufgenommen und für den weiteren Bohrvorgang geführt werden. Vorteilhaft ist die Anpresskraft für die Bohrgeräte voreinstellbar.

Sobald eines der mehreren Bohrgeräte die voreingestellte Bohrtiefe im Bauteil erreicht hat, wird dieses Bohrgerät automatisch von einer Steuerung abgestellt. Nachdem alle Bohrgeräte abgeschaltet sind und somit jedes Bohrgerät die voreingestellte Bohrtiefe im Bauteil erreicht hat, werden alle Bohrgeräte von der Steuerung erneut eingeschaltet. Dann werden alle Bohrgeräte mit den drehangetriebenen Werkzeugen in eine Ausgangsposition der Bohrgeräte gleichzeitig und vorteilhaft synchron zurückgefahren.

Da die Bohrgeräte unabhängig voneinander die Bohrlöcher erstellen, wird ein unnötiger Betrieb und somit Verschleiss der Werkzeuge im Bohrloch vermieden, was die Standzeit der Werkzeuge massgeblich erhöht.

Vorzugsweise werden bei einem Abbruch des Bohrvorgangs über einen Stoppschalter die Bohrgeräte gleichzeitig, mit drehangetriebenen Werkzeugen in ihre Ausgangsstellung zurückgefahren und dann alle Bohrgeräte abgestellt, was den Verschleiss der Werkzeuge in diesem Anwendungsfall gegenüber den bekannten Lösungen, bei denen die Bohrgräte nur abgestellt werden, zusätzlich reduziert.

Die Erfindung wird nachstehend anhand eines Ausführungsbeispiels näher erläutert. Es zeigen:
- Fig. 1: Eine Bohrvorrichtung in Seitenansicht;
- Fig. 2: eine Aufsicht auf die Grundplatte gem. Linie 11-11 in Fig. 1;
- Fig. 3: eine Ansicht auf einen Ständer mit einem Bohrgerät; und
- Fig. 4: eine Führungsbuchse im Schnitt.

Grundsätzlich sind in den Figuren gleiche Teile mit den gleichen Bezugszeichen versehen.

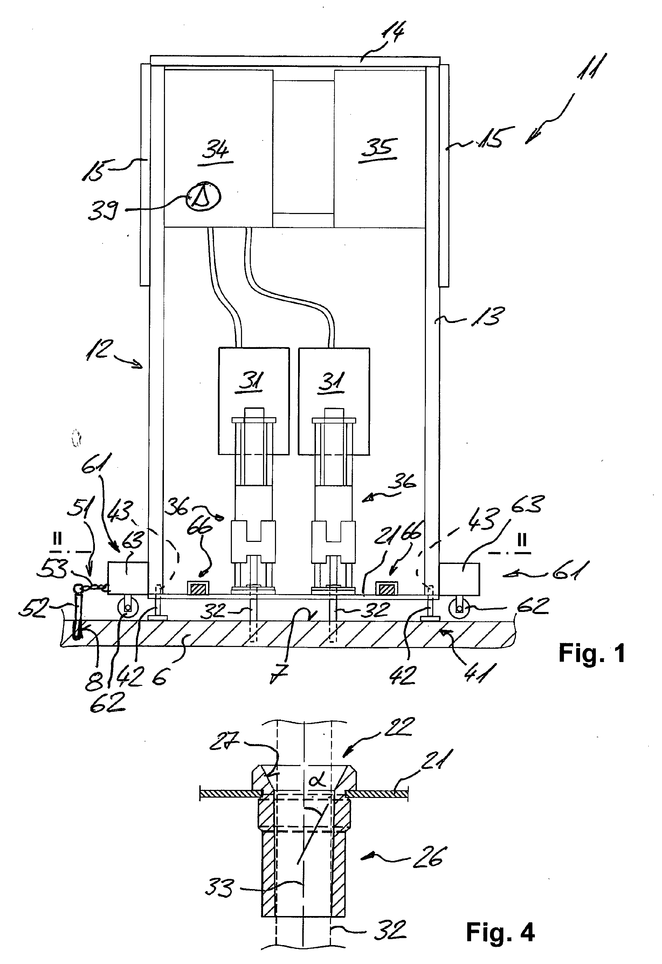

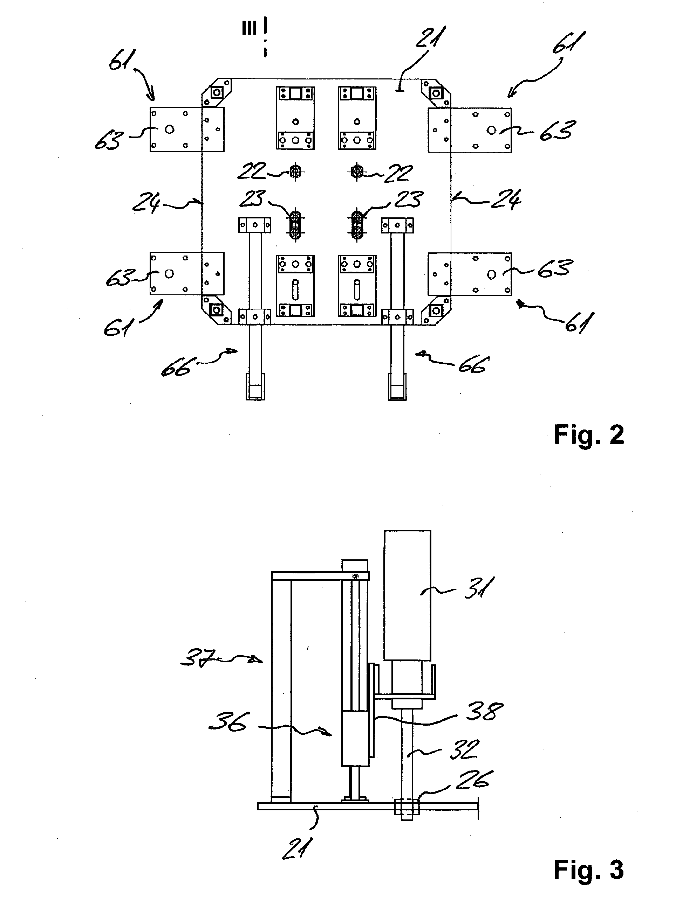

Die in den Figuren 1 bis 4 dargestellte mobile Bohrvorrichtung 11 zum Erstellen von Mehrfachbohrungen in einem Bauteil 6 weist vier zueinander entsprechend des zu erstellenden Bohrbildes beabstandete, an einem Ständer 37 geführte Bohrgeräte 31, die über eine pneumatische Vorschubeinrichtung 36 relativ zum Bauteil 6 verfahrbar sind, und ein Grundgestell 12 auf, an dem die Ständer 37 der Bohrgeräte 31 festgelegt sind. Die Bohrgeräte 31 sind an einem Schlitten 38 lösbar festgelegt, der entlang des Ständers 37 von der Vorschubeinrichtung 36 für einen Vorschub zum Bauteil 6 hin und für ein Zurückfahren der Bohrgeräte 31 in eine Ausgangsstellung von dem Bauteil 6 weg bewegbar ist. Von den Bohrgeräten 31 werden Kernbohrkronen als Werkzeuge 32 drehangetrieben.

Das Grundgestell 12 weist eine Rahmenkonstruktion 13 auf, die als Wetterschutz ein Dach 14 und im oberen Bereich an den Seiten eine Spritzschutzplane 15 trägt. Die Bohrgeräte 31 werden von einer in der Rahmenkonstruktion 13 unterhalb des Dachs 14 angeordneten Steuerung 34 jedes für sich beziehungsweise separat voneinander gesteuert. Weiter ist unterhalb des Dachs 14 eine Pneumatikeinheit 35 für die Vorschubeinrichtungen 36 der Bohrgeräte 31 in der Rahmenkonstruktion 13 vorgesehen.

Weiter umfasst das Grundgestell 12 eine Grundpatte 21, die von den Bohrgeräten 31 beabstandet ist und vier, in einem Rechteck angeordnete Führungsöffnungen 22 und 23 zum Führen der Werkzeuge 32 dieser Bohrgeräte 31 aufweist. Die beiden Führungsöffnungen 23 sind als Langlöcher ausgebildet, deren Längserstreckung gleichgerichtet angeordnet ist.

In jeder der Führungsöffnungen 22 und 23 ist eine Führungsbuchse 26 zum Zentrieren des entsprechenden Werkzeugs 32 vorgesehen, wobei die Führungsbuchsen 26 auswechselbar in den Führungsöffnungen 22 und 23 festgelegt sind. Die Führungsbuchsen 26 sind in den als Langlöchern ausgebildeten Führungsöffnungen 23 verschieblich angeordnet. Die Führungsbuchsen 26 weisen den Bohrgeräten 31 zugewandt jeweils eine Einführschräge 27 auf, welche mit der Bohrachse 33 des Werkzeugs 31 einen Winkel (Alpha) von 40° bis 80°, vorteilhaft 50° bis 70°, einschliesst.

Die Führungsöffnungen 22 und 23 sind derart ausgestaltet und angeordnet, dass ein Bohrbild mit vier Bohrungen 8 in einem Achsabstand von beispielsweise 200 mm auf 200 mm sowie ein Bohrbild mit vier Bohrungen 8 in einem Achsabstand von beispielsweise 200 mm auf 150 mm mit der Bohrvorrichtung 11 erstellt werden kann.

Das Grundgestell 12 weist weiter eine mit dem Bauteil 6 in Anlage kommende Stelleinrichtung 41 auf, mit der das Grundgestell 12 relativ zum Bauteil 6 ausrichtbar ist. Die Stelleinrichtung 41 umfasst vier Stellelemente 42, die zur Höhenjustierung des Grundgestells 12 relativ zum Bauteil 6 in an der Rahmenkonstruktion 12 vorgesehene Gewindebuchsen als Gegenelemente 43 versetzbar eingreifen.

Weiter ist eine Bohrbildabstandseinrichtung 51 zur Erstellung von mehreren zueinander im gleichen Abstand zu erstellenden Bohrbildern vorgesehen, die ein in ein zuvor erstelltes Bohrloch 8 einführbares Ankerelement 52 und ein mit dem Ankerelement 52 und dem Grundgestell 12 verbundene flexible, in der Länge anpassbare Kette als Distanzmittel 53 umfasst.

Zum Umpositionieren der Bohrvorrichtung 11 ist eine Umpositioniervorrichtung 61 an dem Grundgestell 12 vorgesehen, die während dem Bohrvorgang ausser Funktion ist. Die Umpositioniervorrichtung 61 umfasst jeweils zwei, an zwei einander gegenüberliegenden Seiten 24 der Grundplatte 21 angeordnete Rollen 62, die mittels einer pneumatischen Hebeeinrichtung 63 relativ zum Bauteil 6 versetzbar sind.

Zur Führung der Bohrvorrichtung 11 in einem bestimmten Abstand zu einer Kante des Bauteils 6 ist eine verstellbare Seitenführungseinrichtung 66 an der Grundplatte 21 vorgesehen.

Nachfolgend wird ein erfindungsgemässes Verfahren zum Erstellen von Mehrfachbohrungen in dem Bauteil 6 mit der Bohrvorrichtung 11 dargelegt.

Zuerst wird die Bohrvorrichtung 11 an der gewünschten Position am Bauteil 6 positioniert, wozu die Rollen 62 der Umpositioniervorrichtung 61 in Richtung des Bauteils 6 verfahren wurden, bis diese an der Oberfläche 7 des Bauteils 6 anliegen und das gesamte Grundgestell 12 abgehoben wird. In dieser Stellung der Umpositioniervorrichtung 61 ist die Stelleinrichtung 41 nicht mehr mit dem Bauteil 6 in Anlage. Anschliessend werden die Rollen 62 mittels der Hebeeinrichtung 63 zurückgezogen, wobei sich das gesamte Grundgestell 12 aufgrund der Schwerkraft in Richtung des Bauteils 6 bewegt und die Stellelemente 42 der Stelleinrichtung 41 wieder mit Bauteil 6 in Anlage kommen. In dieser Stellung der Rollen 62 ist die Umpositioniervorrichtung 61 ausser Funktion.

Durch Versetzen der Stellelemente 42 relativ zum Grundgestell 12 wird die Bohrvorrichtung 11 relativ zum Bauteil 6 lotrecht ausgerichtet. Über einen hier nicht dargestellten Ein-Schalter werden gleichzeitig alle Bohrgeräte 31 eingeschaltet.

Mittels der Vorschubeinrichtung 36 werden alle Bohrgeräte 31 in Richtung des Bauteils 31 mit der gleichen, voreingestellten Anpresskraft vorgeschoben, wobei die Werkzeuge 32 in den Führungsbuchsen 26 geführt werden, die in den Führungsöffnungen 22 bzw. 23 angeordnet sind. Sobald ein Bohrgerät 31 die voreingestellte Bohrtiefe im Bauteil 6 erreicht hat, wird dieses Bohrgerät 31 automatisch abgestellt. Die anderen Bohrgeräte 31 bleiben bis zum Erreichen der voreingestellten Bohrtiefe in Betrieb.

Nachdem alle Bohrgeräte 31 abgeschaltet sind und somit jedes der Bohrgerät 31 die voreingestellte Bohrtiefe im Bauteil 6 erreicht hat, werden alle Bohrgeräte 31 von der Steuerung 34 erneut eingeschaltet und mit den drehangetriebenen Werkzeugen 32 gleichzeitig und vorteilhaft synchron in eine Ausgangsposition der Bohrgeräte 31 zurückgefahren. Die Bohrvorrichtung 11 steht für einen neuen Bohrvorgang zur Verfügung und kann nun umpositioniert werden.

An der Steuerung 34 ist ein Stoppschalter 39 vorgesehen, bei dessen Betätigung der Bohrvorgang unterbrochen wird und die Bohrgeräte 31 mit den drehangetriebenen Werkzeugen 32 automatisch, gleichzeitig und vorteilhaft synchron in ihre Ausgangsstellung zurückgefahren sowie dann abgestellt werden.

## Patentansprüche

1. Mobile Bohrvorrichtung zum Erstellen von Mehrfachbohrungen in einem Bauteil (6) mit mehreren zueinander entsprechend des zu erstellenden Bohrbildes beabstandeten, ständergeführten Bohrgeräten (31), die über eine Vorschubeinrichtung (36) relativ zum Bauteil (6) verfahrbar sind, und
mit einem Grundgestell (12), an dem die ständergeführten Bohrgeräte (31) festgelegt sind, **dadurch gekennzeichnet, dass**
das Grundgestell (12) eine Grundplatte (21), die von den Bohrgeräten (31) beabstandet ist und zumindest eine Führungsöffnung (22, 23) zum Führen der Werkzeuge (32) dieser Bohrgeräte (31) aufweist, sowie
eine mit dem Bauteil (6) in Anlage kommende Stelleinrichtung (41) umfasst, mit der das Grundgestell (12) relativ zum Bauteil (6) ausrichtbar ist.

2. Bohrvorrichtung nach Anspruch 1, **dadurch gekennzeichnet, dass** zumindest eine der Anzahl der Bohrgeräte (31) entsprechende Anzahl von Führungsöffnungen (22, 23) zum Führen der Werkzeuge (32) dieser Bohrgeräte (31) in der Grundplatte (21) vorgesehen ist.

3. Bohrvorrichtung nach Anspruch 2, **dadurch gekennzeichnet, dass** zumindest vier in einem Rechteck angeordnete Führungsöffnungen (22, 23) in der Grundplatte (21) vorgesehen sind.

4. Bohrvorrichtung nach Anspruch 2 oder 3, **dadurch gekennzeichnet, dass** zumindest zwei der Führungsöffnungen (23) als Langlöcher ausgebildet sind, deren Längserstreckung gleichgerichtet angeordnet ist.

5. Bohrvorrichtung nach einem der Ansprüche 1 bis 4, **dadurch gekennzeichnet, dass** in jeder der Führungsöffnungen (22, 23) eine Führungsbuchse (26) zum Zentrieren der Werkzeuge (32) zumindest eines Bohrgerätes (31) vorgesehen ist.

6. Bohrvorrichtung nach Anspruch 5, **dadurch gekennzeichnet, dass** die Führungsbuchsen (26) auswechselbar in den Führungsöffnungen (22, 23) festgelegt sind.

7. Bohrvorrichtung nach Anspruch 5 oder 6, **dadurch gekennzeichnet, dass** die Führungsbuchsen (26) den Bohrgeräten (31) zugewandt eine Einführschräge (27) aufweisen.

8. Bohrvorrichtung nach Anspruch 7, **dadurch gekennzeichnet, dass** die Einführschräge (27) der Führungsbuchse (26) mit der Bohrachse (33) des Werkzeugs (32) einen Winkel (Alpha) von 40° bis 80°, vorteilhaft 50° bis 70°, einschliesst.

9. Bohrvorrichtung nach einem der Ansprüche 1 bis 8, **dadurch gekennzeichnet, dass** die Stelleinrichtung (41) mehrere Stellelemente (42) umfasst, die zur Höhenjustierung des Grundgestells (12) relativ zum Bauteil (6) in Gegenelemente (43) versetzbar eingreifen.

10. Bohrvorrichtung nach einem der Ansprüche 1 bis 9, **dadurch gekennzeichnet, dass** eine Bohrbildabstandseinrichtung (51) zur Erstellung von mehreren zueinander im gleichen Abstand zu erstellenden Bohrbildern vorgesehen ist.

11. Bohrvorrichtung nach Anspruch 10, **dadurch gekennzeichnet, dass** die Bohrbildabstandseinrichtung (51) ein in ein zuvor erstelltes Bohrloch (8) einführbares Ankerelement (52) und ein mit dem Ankerelement (52) und dem Grundgestell (12) verbundenes flexibles, vorteilhaft in seiner Länge anpassbares Distanzmittel (53) umfasst.

12. Bohrvorrichtung nach einem der Ansprüche 1 bis 11, **dadurch gekennzeichnet, dass** eine Umpositioniervorrichtung (61) an dem Grundgestell (12) zum Umpositionieren der Bohrvorrichtung (11) vorgesehen ist, die während dem Bohrvorgang ausser Funktion ist.

13. Bohrvorrichtung nach Anspruch 12, **dadurch gekennzeichnet, dass** die Umpositioniervorrichtung (61) zumindest zwei Rollen (62) umfasst, die relativ zum Bauteil (6) versetzbar sind.

14. Bohrvorrichtung nach einem der Ansprüche 1 bis 13, **dadurch gekennzeichnet, dass** eine verstellbare Seitenführungseinrichtung (66) an dem Grundgestell (12) zur Führung der Bohrvorrichtung (11) in einem bestimmten Abstand zu einer Kante des Bauteils (6) vorgesehen ist.

15. Verfahren zum Erstellen von Mehrfachbohrungen in einem Bauteil (6) mit einer Bohrvorrichtung (11) nach einem der Ansprüche 1 bis 14, die mehrere zueinander entsprechend des zu erstellenden Bohrbildes beabstandete, ständergeführte, über eine Vorschubeinrichtung (36) relativ zum Bauteil (6) verfahrbare sowie einzeln gesteuerte Bohrgeräte (31) aufweist, die in einem Grundgestell (12) der Bohrvorrichtung (11) angeordnet sind, umfassend die Schritte:
- Positionieren der Bohrvorrichtung (11) an der gewünschten Position am Bauteil (6);
- Lotrechtes Ausrichten der Bohrvorrichtung (11) relativ zum Bauteil (6) mittels einer am Grundgestell (12) angeordneten, mit dem Bauteil (6) in Anlage gebrachten Stelleinrichtung (41);
- Gleichzeitiges Einschalten aller Bohrgeräte (31);
- Vorschub aller Bohrgeräte (31) in Richtung des Bauteils (6) mit der gleichen, vorteilhaft voreingestellten Anpresskraft;
- Automatisches Abstellen des Bohrgerätes (31), das die voreingestellte Bohrtiefe im Bauteil (6) erreicht hat;
- Erneutes Einschalten aller Bohrgeräte (31) von der Steuerung (34), nachdem alle Bohrgeräte (31) abgeschaltet sind und somit jedes Bohrgerät (31) die voreingestellte Bohrtiefe im Bauteil (6) erreicht hat; und
- Gleichzeitiges Zurückfahren aller Bohrgeräte (31) mit den drehangetriebenen Werkzeugen (32) in eine Ausgangsposition der Bohrgeräte (31).

16. Verfahren nach Anspruch 15, **dadurch gekennzeichnet, dass** bei einem Abbruch des Bohrvorgangs über einen Stoppschalter die Bohrgeräte (31) gleichzeitig, mit drehangetriebenen Werkzeugen (32) in ihre Ausgangsstellung zurückgefahren und dann alle Bohrgeräte (31) abgestellt werden.

## Claims

1. Mobile drilling apparatus for drilling a plurality of holes in a construction element (6) with a plurality of column-guided drills (31) which are spaced apart in accordance with the hole pattern required and are movable relative to the construction element (6) by means of a feed mechanism (36), and
with a basic frame (12) to which the column-guided drills (31) are fixed, **characterized in that**
the basic frame (12) comprises a base plate (21) which is spaced apart from the drills (31) and which has at least one guide opening (22, 23) for guiding the tools (32) of said drills (31), and
a positioning device (41) coming in contact with the construction element (6) for orientating the basic frame (12) relative to the construction element (6).

2. Drilling apparatus according to Claim 1, **characterized in that** at least one of the plurality of drills (31) is provided with a corresponding number of guide openings (22, 23) in the base plate (21) for guiding the tools (32) of said drills (31).

3. Drilling apparatus according to Claim 2, **characterized in that** at least four guide openings (22, 23) arranged in a rectangle are provided in the base plate (21).

4. Drilling apparatus according to Claim 2 or Claim 3, **characterized in that** at least two of the guide openings (23) are formed as slots which are longitudinally coaligned.

5. Drilling apparatus according to any one of Claims 1 to 4, **characterized in that** a guide bush (26) is provided in each of the guide openings (22, 23) to centre the tools (32) of at least one drill (31).

6. Drilling apparatus according to Claim 5, **characterized in that** the guide bushes (26) are replaceably fitted in the guide openings (22, 23).

7. Drilling apparatus according to Claim 5 or Claim 6, **characterized in that** the guide bushes (26) have a lead-in bevel (27) facing towards the drills (31).

8. Drilling apparatus according to Claim 7, **characterized in that** the lead-in bevel (27) of the guide bush (26) includes an angle (*alpha*) of 40° to 80°, advantageously 50° to 70°, with the drilling axis (33) of the tool (32).

9. Drilling apparatus according to any one of Claims 1 to 8, **characterized in that** the positioning device (41) comprises a plurality of positioning elements (42) which displaceably engage in mating elements (43) for adjusting the height of the basic frame (12) relative to the construction element (6).

10. Drilling apparatus according to any one of Claims 1 to 9, **characterized in that** a hole-pattern spacing device (51) is provided for setting up a plurality of hole patterns to be produced at equal intervals.

11. Drilling apparatus according to Claim 10, **characterized in that** the hole-pattern spacing device (51) comprises an anchor element (52) insertable into a previously drilled hole (8), and a flexible distancing means (53), advantageously adjustable in length, connected to the anchor element (52) and the basic frame (12).

12. Drilling apparatus according to any one of Claims 1 to 11, **characterized in that** a repositioning apparatus (61), inoperative during the drilling operation, is provided on the basic frame (12) for repositioning the drilling apparatus (11).

13. Drilling apparatus according to Claim 12, **characterized in that** the repositioning apparatus comprises at least two rollers (62) which are displaceable relative to the construction element (6).

14. Drilling apparatus according to any one of Claims 1 to 13, **characterized in that** an adjustable lateral guide device (66) is provided on the basic frame (12) for guiding the drilling apparatus (11) at a set distance from an edge of the construction element (6).

15. Method for drilling a plurality of holes in a construction element (6) with a drilling apparatus (11) according to any one of Claims 1 to 14, which has a plurality of column-guided drills (31) which are spaced apart in accordance with the hole pattern required and are movable relative to the construction element (6) by means of a feed mechanism (36), and are arranged in a basic frame (12) of the drilling apparatus (11), comprising the following steps:
- positioning the drilling apparatus (11) at the desired position on the construction element (6);
- vertically truing the drilling apparatus (11) relative to the construction element (6) by means of a positioning device (41) arranged on the basic frame (12) and brought in contact with the construction element (6);
- switching on all the drills (31) simultaneously;
- feeding all the drills (31) towards the construction element (6) with an equal contact force which is advantageously preset;
- automatically switching off the drill (31) when it reaches the preset drilling depth in the construction element (6);
- switching all drills (31) on again by means of the control (34) once all the drills (31) have been switched off and therefore every drill (31) has reached the preset drilling depth in the construction element (6); and
- simultaneously withdrawing all the drills (31), with their tools (32) driven in rotation, to an initial position of the drills (31).

16. Method according to Claim 15, **characterized in that** if the drilling operation is aborted by means of a stop switch, the drills (31) are simultaneously withdrawn to their initial position with their tools (32) driven in rotation, and all the drills (31) are then switched off.

## Revendications

1. Dispositif de perçage mobile destiné à créer de multiples trous dans un composant de construction (6), comportant plusieurs unités de perçage (31) guidées sur colonne, espacées les unes des autres en fonction du gabarit de perçage à créer, lesquelles unités de perçage peuvent être déplacées par rapport au composant de construction (6) par l'intermédiaire d'un dispositif d'avance (36), et
comportant un bâti de base (12) sur lequel sont fixées les unités de perçage guidées sur colonne (31), **caractérisé en ce que**
le bâti de base (12) comporte une platine (21) qui est espacée des unités de perçage (31) et au moins une ouverture de guidage (22, 23) pour guider les outils (32) de ces unités de perçage (31), et
comprend un dispositif de réglage (41) venant en contact avec le composant de construction (6), au moyen duquel le bâti de base (12) peut être aligné par rapport au composant de construction (6).

2. Dispositif de perçage selon la revendication 1, **caractérisé en ce qu'**au moins un nombre d'ouvertures de guidage (22, 23) correspondant au nombre des unités de perçage (31) est prévu pour guider les outils (32) de ces unités de perçage (31) dans la platine (21).

3. Dispositif de perçage selon la revendication 2, **caractérisé en ce qu'**au moins quatre ouvertures de guidage (22, 23) agencées dans un rectangle sont prévues dans la platine (21).

4. Dispositif de perçage selon la revendication 2 ou 3, **caractérisé en ce qu'**au moins deux des ouvertures de guidage (22, 23) sont formées comme des trous oblongs dont l'étendue longitudinale est orientée dans une même direction.

5. Dispositif de perçage selon l'une des revendications 1 à 4, **caractérisé en ce que** dans chacune des ouvertures de guidage (22, 23) est prévue une douille de guidage (26) pour le centrage des outils (32) d'au moins d'une unité de perçage (31).

6. Dispositif de perçage selon la revendication 5, **caractérisé en ce que** les douilles de guidage (26) sont fixées dans les ouvertures de guidage (22, 23) de manière à pouvoir être remplacées.

7. Dispositif de perçage selon la revendication 5 ou 6, **caractérisé en ce que** les douilles de guidage (26) comportent un biseau d'insertion (27) dirigé vers les unités de perçage (31).

8. Dispositif de perçage selon la revendication 7, **caractérisé en ce que** le biseau d'insertion (27) de la douille de guidage (26) forme un angle (alpha) compris entre 40° et 80°, de préférence entre 50° et 70°, avec l'axe de perçage (33) de l'outil (32).

9. Dispositif de perçage selon l'une des revendications 1 à 8, **caractérisé en ce que** le dispositif de réglage (41) comprend plusieurs éléments de réglage (42) qui s'engagent de manière mobile dans des éléments complémentaires (43) pour régler la hauteur du bâti de base (12) par rapport au composant de construction (6).

10. Dispositif de perçage selon l'une des revendications 1 à 9, **caractérisé en ce qu'**un dispositif d'espacement de gabarit de perçage (51) est prévu pour créer plusieurs gabarits de perçage à créer à égale distance les uns des autres.

11. Dispositif de perçage selon la revendication 10, **caractérisé en ce que** le dispositif d'espacement de gabarit de perçage (51) comprend un élément d'ancrage (52) pouvant être introduit dans un trou de perçage créé au préalable (8) et des moyens d'écartement (53) souples pouvant être adaptés avantageusement dans leur longueur et reliés au bâti de base (12).

12. Dispositif de perçage selon l'une des revendications 1 à 11, **caractérisé en ce qu'**un dispositif de repositionnement (61) est prévu sur le bâti de base (12) afin de repositionner le dispositif de perçage (11), lequel dispositif de repositionnement étant hors service pendant l'opération de perçage.

13. Dispositif de perçage selon la revendication 12, **caractérisé en ce que** le dispositif de repositionnement (61) inclut au moins deux roulettes (62) qui peuvent être déplacées par rapport au composant de construction (6).

14. Dispositif de perçage selon l'une des revendications 1 à 13, **caractérisé en ce qu'**un dispositif de guidage latéral réglable (66) est prévu sur le bâti de base (12) pour guider le dispositif de perçage (11) à une certaine distance par rapport à un bord du composant de construction (6).

15. Procédé pour créer des trous multiples dans un composant de construction (6) avec un dispositif de perçage (11) selon l'une des revendications 1 à 14, lequel dispositif de perçage comporte plusieurs unités de perçage (31), guidées sur colonne, pouvant être déplacées par rapport au composant de construction (6) par l'intermédiaire d'un dispositif d'avance (36), espacées les uns des autres en fonction du gabarit de perçage à créer et commandées individuellement, lesquelles unités de perçage sont agencées dans un bâti de base (12) du dispositif de perçage (11), comportant les étapes consistant à :
- positionner le dispositif de perçage (11) dans la position voulue sur le composant de construction (6),
- orienter perpendiculairement le dispositif de perçage (11) par rapport au composant de construction (6) au moyen d'un dispositif de réglage (41) mis en contact avec le composant de construction (6) et agencé sur le bâti de base (12),
- mettre simultanément en marche toutes les unités de perçage (31),
- faire avancer toutes les unités de perçage (31) en direction du composant de construction (6) avec la même force de pression de préférence préréglée,
- arrêter automatiquement l'unité de perçage (31) qui a atteint la profondeur de perçage préréglée dans le composant de construction (6),
- remettre en marche toutes les unités de perçage (31) à partir de la commande (34), après que les unités de perçage (31) aient été arrêtées et qu'ainsi chaque unité de perçage ait atteint la profondeur de perçage préréglée dans le composant de construction (6), et
- rétracter simultanément toutes les unités de perçage (31) avec les outils entraînés en rotation (32) dans une position de départ des unités de perçage (31).

16. Procédé selon la revendication 15, **caractérisé en ce que**, en cas d'interruption de l'opération de perçage au moyen d'un commutateur d'arrêt, les unités de perçage (31) sont simultanément rétractées, les outils entraînés en rotation (32) retournant dans leur position de départ, et toutes les unités de perçage (31) étant ensuite arrêtées.
